# DEMANDE DE BREVET EUROPEEN

(11) **EP 4 715 778 A1**
(43) Date de publication de la demande: **25.03.2026**
(21) Numéro de dépôt: 25200389.2
(22) Date de dépôt: 05.09.2025
(51) Int. Cl.: G08C 17/02, H04L 12/28, H04W 4/30, G08C 13/02

(54) **PROCÉDÉ D ASSOCIATION D'UN PROTOCOLE DE COMMUNICATION À UN VOLET MOTORISÉ D'UN BÂTIMENT**

(30) Priorité: 24.09.2024 FR 2410163
(71) Demandeur: BHG, 68100 Mulhouse (FR)
(72) Inventeur: STRITT, Arnaud, 68680 KEMBS (FR); FRITSCH, Thomas, 67800 HOENHEIM (FR)
(74) Mandataire: Cabinet Bleger-Rhein-Poupon

(57) **Abrégé**

Procédé d'association d'un protocole de communication à un volet motorisé d'un bâtiment, ledit volet étant entraîné par un moteur commandable au moyen d'une télécommande individuelle, ladite télécommande étant reliée à une unité de pilotage des déplacements du volet via un premier protocole de communication propriétaire sécurisé, ledit moteur étant apte à être commandé au moyen d'un second protocole de communication ouvert de type zigbee. Le premier protocole de communication propriétaire sécurisé est utilisé pour attribuer l'accès au volet via le second protocole sécurisé ou pour cesser cette attribution, au moyen d'échanges de signaux réalisés via le premier protocole de communication.

## Description

La présente invention a trait à un procédé d'association d'un protocole de communication notamment à un système comprenant un volet motorisé d'un bâtiment et sa télécommande, en vue de le rendre compatible avec un autre protocole de communication que celui pour lequel il est initialement programmé. L'objectif technique est de permettre la mise en oeuvre, par un système fonctionnant à l'origine (en sortie d'usine) avec un protocole de communication propriétaire, d'un autre protocole, par exemple un protocole standard basé sur la norme IEEE 802.15.4 pour les réseaux à dimension personnelle, tel que le protocole zigbee. En pratique, le but poursuivi est de rendre ouvert le système initial, d'abord fermé car tributaire d'un mode de transmission d'informations propriétaire, pour pouvoir l'insérer dans un autre environnement domotique, proposé et utilisé par d'autres opérateurs du même marché.

Dans le contexte de la présente invention, à savoir principalement celui des volets roulants motorisés, le volet est classiquement entraîné par un moteur électrique commandable au moyen d'une télécommande individuelle, ladite télécommande étant reliée à une unité électronique de pilotage des déplacements du volet. Le produit disponible à la vente est en pratique constitué d'un volet et de sa télécommande, dont les communications sont dans ce cas réglées via le protocole de communication propre au fabricant. Il y a donc un lien opérationnel fort entre les deux composants du système, qui exclut a priori tout fonctionnement dans un autre environnement par absence de possibilité de commande du volet via un autre protocole de communication.

Or, dans le marché actuel de la domotique en développement constant, on trouve de plus en plus de solutions de commande automatisée d'objets connectés supposés rendre plus simple le quotidien et améliorer le confort d'habitation. Dans leur volonté de couvrir le plus de connectivité possible, les fabricants proposent en général un kit, comprenant à titre essentiel au moins un objet connectable (prise, luminaire, thermostat de chauffage..) auquel s'ajoute en pratique un boîtier de traitement des signaux issu du ou des objets à connecter, et enfin une interface de commande du type application de téléphone mobile gérée par l'utilisateur final. Ce dernier peut, dans une volonté de centraliser la commande de plusieurs objets de nature diverse dans son habitation, vouloir intégrer un volet automatisé et sa télécommande à l'ensemble des éléments qu'il gère via son application.

L'intégration d'un objet nécessite une reconnaissance de l'objet, puis son intégration dans le parc des éléments effectivement gérés dans le réseau connecté. Pour que cette reconnaissance puisse avoir lieu, il faut que l'ensemble des composants puisse communiquer, et ils doivent par conséquent partager un langage de communication commun. Les configurations de systèmes domotiques qui existent sur le marché fonctionnent à cet effet avec des protocoles de communication standards, largement distribués et partagés par le plus grand nombre, dont les plus connus sont Bluetooth, Zigbee, voire Wifi, chacun ayant des spécificités le rendant plus ou moins adapté à certains fonctionnements et donc à des typologies de réseaux.

Dans l'hypothèse où un objet est d'emblée configuré pour fonctionner avec un langage spécifique, se pose la question de la possibilité de l'intégrer facilement à un environnement connecté fonctionnant avec un autre langage. Secondairement, il peut être judicieux ou nécessaire de le faire sans être contraint à intervenir sur l'objet lui-même. Pour les volets, en particulier, dont les moyens moteurs et leurs moyens de pilotage électroniques ne sont pas forcément faciles d'accès, rendre l'objet connectable à un nouvel environnement domotique sans intervention directe au niveau du volet est un prérequis.

L'invention propose une solution innovante pour répondre à ces problématiques à la fois d'association d'un protocole de communication standard et d'opérabilité sans intervention lourde, d'abord sous la forme d'un procédé. **Il** s'agit d'un procédé d'association d'un protocole de communication à un volet motorisé d'un bâtiment, ledit volet étant classiquement entraîné par un moteur commandable au moyen d'une télécommande individuelle, ladite télécommande étant reliée à une unité de pilotage des déplacements du volet via un premier protocole de communication propriétaire sécurisé, ledit moteur étant enfin apte à être commandé au moyen d'un second protocole de communication ouvert de type zigbee. Le procédé de l'invention est ainsi tel que le premier protocole de communication propriétaire sécurisé est utilisé pour attribuer l'accès au volet via le second protocole de communication ouvert ou pour cesser cette attribution, au moyen d'échanges de signaux réalisés via le premier protocole de communication.

En d'autres termes, pour obtenir une compatibilité avec un environnement de transmission fonctionnant par exemple selon le protocole de communication Zigbee, ce qui revient à permettre l'inclusion ou la reconnaissance du volet, objet connecté particulier, dans un tel environnement, on agit, dans le cadre du procédé de l'invention, en se basant sur le protocole de communication propriétaire, implanté à l'origine sur le système.

En fait, plus précisément, une requête d'association audit second protocole est envoyée à l'unité de pilotage du moteur du volet, ladite requête étant générée à partir de la télécommande et étant constituée d'un code d'association résultant d'au moins une manipulation d'au moins un bouton de ladite télécommande. La télécommande envoie au volet, plus précisément à son unité de pilotage qui comporte des moyens d'émission réception, un message qui provoque l'ouverture d'une période pendant laquelle une connexion peut s'effectuer entre d'une part ledit volet et son unité de pilotage et d'autre part des moyens de gestion d'objets connectés externes fonctionnant selon le second protocole, et accessibles par des échanges de signaux via ladite unité de pilotage.

Concrètement, en réponse au message généré par la télécommande, un signal est réémis par ladite unité de pilotage, signal qui est intelligible par les moyens de gestion du réseau connecté utilisant ce second protocole, à savoir par exemple un boîtier de commande et une interface de type applicatif implantée sur un terminal de type téléphone mobile ou ordinateur domestique. Un appairage de ces moyens avec le volet est alors possible.

Pour clore cette période d'appairage, principalement à des fins de sécurité, un message de fin d'opération d'association audit second protocole est envoyé à l'unité de pilotage du moteur du volet, ledit message étant généré à partir de la télécommande et étant constitué d'un code de fin d'opération d'association résultant également d'au moins une manipulation d'au moins un bouton de ladite télécommande. Le code généré dans ce cas est évidemment différent du précédent. A l'issue de cette fenêtre temporelle refermée par l'envoi de ce dernier message, plus aucun appairage ne peut être établi avec un environnement exogène au protocole de communication initialement programmé pour le volet et sa télécommande.

Par ailleurs, selon l'invention, une requête de suppression d'association dudit second protocole peut enfin être envoyée à l'unité de pilotage du moteur du volet, ladite requête étant générée à partir de la télécommande et étant constituée d'un code de suppression d'association résultant aussi d'au moins une manipulation d'au moins un bouton de ladite télécommande. La possibilité de connexion avec le monde connecté fonctionnant sur la base du second protocole de communication est supprimée. On en revient alors au fonctionnement initial selon un unique protocole de communication, celui qui est résident, implanté à la fabrication du volet, qui n'est pas ouvert aux protocoles standards du marché des objets connectés. Il est à noter que le second protocole de communication ne joue aucun rôle dans les opérations de suppression, qui ne sont basées que sur le protocole initial résident.

De fait, l'invention concerne aussi un volet motorisé d'un bâtiment pouvant s'associer à un second protocole de communication selon les étapes du procédé mentionnées auparavant, ledit volet étant classiquement entraîné par un moteur commandable au moyen d'une télécommande individuelle, ladite télécommande étant reliée à une unité de pilotage des déplacements du volet via un premier protocole de communication propriétaire sécurisé, ledit moteur étant par ailleurs apte à être commandé au moyen d'un second protocole de communication ouvert de type Zigbee. Comme évoqué auparavant, et selon la présente catégorie de l'invention, l'organe de commande d'appairage du volet à un module de commande domotique fonctionnant selon un second protocole de communication ouvert de type Zigbee est la télécommande.

Dans la plupart des cas, les appairages d'objets connectés s'effectuent en actionnant un bouton placé directement sur ledit objet. Celui-ci devient alors repérable sur une interface de gestion du réseau, et l'utilisateur peut l'ajouter aux objets à piloter, via ledit réseau, qui obéissent au protocole correspondant. Dans le cas de l'invention, l'organe d'actionnement est en quelque sorte délocalisé hors de l'objet, le volet, et tributaire du protocole de communication résident. Il ne serait en effet pas facile, techniquement, d'actionner un bouton d'appairage directement au niveau du volet, car cela nécessiterait des opérations de démontage, au surplus chronophages.

D'autres buts et avantages de la présente invention apparaîtront au cours de la description qui va suivre, se rapportant à un mode de réalisation qui n'est donné qu'à titre d'exemple indicatif. La compréhension de cette description sera en particulier facilitée en référence à l'unique figure jointe en annexe et dans laquelle :

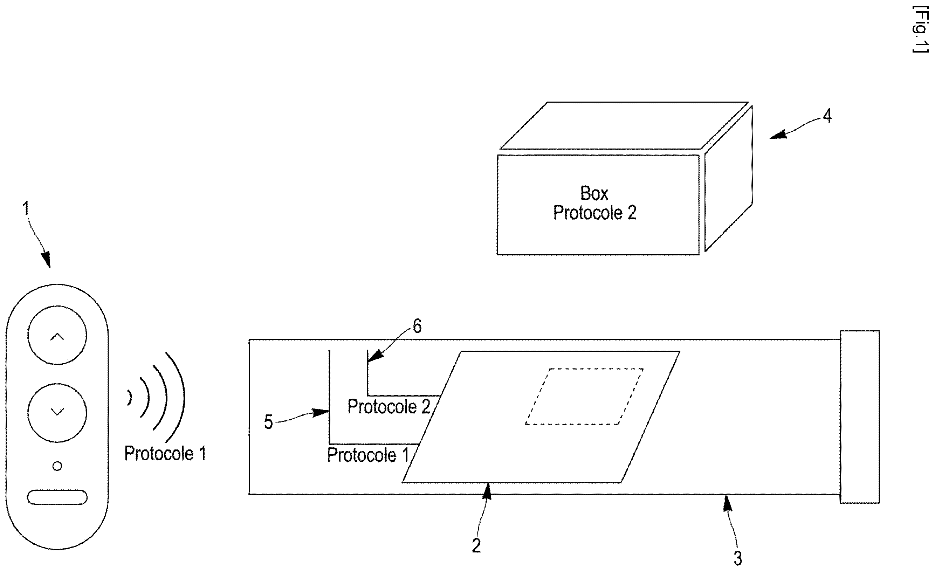

[Fig.1] montre un diagramme schématique du fonctionnement global du système permettant de mieux comprendre le procédé d'association d'un protocole de communication à un volet motorisé d'un bâtiment pilotable par une télécommande.

En référence à la figure, la télécommande 1 est en communication radio avec l'unité de pilotage du volet 2 placée au voisinage de ce dernier, unité qui comporte à titre principal un microcontrôleur, et qui gère les déplacements du volet entraîné par un moteur électrique. Elle commande le moteur et gère les signaux en provenance de capteurs tels que de butées mécaniques. Cette unité de pilotage 2 est par exemple localisée dans le tube d'enroulement 3 du tablier du volet (non représenté). L'unité de pilotage 2 gère ce système matériel via une télécommande qui est propre au volet, livrée avec lui et programmée pour communiquer avec lui. A cet effet, et comme mentionné ci-dessus, un premier protocole (Protocole 1) de communication est résident, c'est-à-dire implanté d'office à la fabrication, permettant l'intelligibilité des échanges de messages entre la télécommande 1 et le volet, et par conséquent le pilotage des déplacements de l'un par l'autre.

L'invention a pour objet de permettre que, malgré cette contrainte liée à l'unicité du protocole de transmission d'informations en place, le système puisse associer un second protocole de communication plus généraliste. Dans la pratique, en général, les réseaux d'objets connectés classiques sont gérés notamment via un boîtier de commande 4, par exemple une box, fonctionnant selon ce second protocole (Protocole 2). De nombreux réseaux d'objets connectés fonctionnent ainsi selon le standard d'échanges de signaux Zigbee. L'unité de pilotage 2 comporte dès lors des moyens de gérer des trames de signaux émis et réceptionnés selon deux spectres de fréquences différents attribués respectivement au Protocole 1 et au Protocole 2 (par exemple Zigbee), au moyen d'antennes 5, 6 distinctes.

En pratique, le codage de divers messages peut être effectué par manipulation d'au moins un bouton de ladite télécommande. Plus précisément, en lien avec la figure, si la télécommande comporte trois boutons, il est possible de procéder à de multiples combinaisons aboutissant à des codages distincts, en vue de la mise en oeuvre de fonctions différentes, par sélection de combinaisons diverses des boutons et/ou appui de plus ou moins longue durée sur eux. Les codes générés sont envoyés de la télécommande 1 à l'unité de pilotage 2 suivant le Protocole 1 résident. Ils sont réceptionnés via l'antenne 5 et traités par le microcontrôleur de l'unité de pilotage 2 du volet.

Lorsque le message reçu correspond à un code d'ouverture de la possibilité d'accepter l'association à un autre réseau d'objets connectés, en l'occurrence celui de la box 4, une trame de signaux correspondante est émise par le microcontrôleur, via l'antenne 6. Ce message est envoyé à l'adresse de moyens de pilotage fonctionnant selon le Protocole 2, à savoir notamment et principalement la box 4 et concerne aussi, secondairement, une interface de gestion se présentant sous la forme d'un terminal de type téléphone mobile équipé d'une application adéquate. Le volet devient alors un objet connecté fonctionnant selon le Protocole 2. Il est reconnu comme tel par le réseau correspondant, et peut-être ajouté aux objets connectés qui le constituent.

Lorsque le volet est associé au réseau fonctionnant sous Protocole 2, une autre combinaison de touches met fin à la fenêtre temporelle qui permettait l'association de ce second protocole de communication liée à un réseau connecté exogène au système de base, l'ajout du volet y étant effective. Une nouvelle trame de signaux qui résulte de cette combinaison est envoyée par la télécommande 1 à l'unité de pilotage 2, toujours selon le premier protocole de communication (Protocole 1) via l'antenne 5, trame que le microcontrôleur traite en vue de refermer ladite fenêtre pour éviter d'autres modifications des réseaux d'objets connectés fonctionnant sous les Protocole 1 et Protocole 2, qui restent en l'état.

**Il** est enfin possible, par encore une autre combinaison de touches, et par conséquent toujours selon une gestion opérée purement par le protocole de communication résident (Protocole 1), de supprimer l'association au second protocole de communication (Protocole 2). A réception du message envoyé par la télécommande, le microcontrôleur de l'unité de pilotage 2 du volet cesse de s'ouvrir à des communications selon ledit second protocole.

L'exemple de configuration qui fait l'objet de la figure ne représente qu'une possibilité de mis en œuvre de l'invention, et ne doit pas être considéré comme exhaustif de celle-ci, qui englobe au contraire toutes possibilités de messages fonctionnels obtenus par diverses combinaisons de touches et de durées d'appui sur les touches pour le codage des trames diffusées par la télécommande, ainsi que d'autres configurations de télécommandes, variant par exemple par le nombre de touches à manipuler etc.

## Revendications

1. Procédé d'association d'un protocole de communication à un volet motorisé d'un bâtiment, ledit volet étant entraîné par un moteur commandable au moyen d'une télécommande individuelle, ladite télécommande étant reliée à une unité de pilotage des déplacements du volet via un premier protocole de communication propriétaire sécurisé, ledit moteur étant apte à être commandé au moyen d'un second protocole de communication ouvert de type zigbee, **caractérisé en ce que** le premier protocole de communication propriétaire sécurisé est utilisé pour attribuer l'accès au volet via le second protocole de communication ouvert ou pour cesser cette attribution, au moyen d'échanges de signaux réalisés via le premier protocole de communication.

2. Procédé d'association d'un protocole de communication à un volet motorisé d'un bâtiment selon la revendication précédente, **caractérisé en ce qu'**une requête d'association audit second protocole est envoyée à l'unité de pilotage du moteur du volet, ladite requête étant générée à partir de la télécommande et étant constituée d'un code d'association résultant d'au moins une manipulation d'au moins un bouton de ladite télécommande.

3. Procédé d'association d'un protocole de communication à un volet motorisé d'un bâtiment selon l'une des revendications précédente, **caractérisé en ce qu'**un message de fin d'opération d'association audit second protocole est envoyé à l'unité de pilotage du moteur du volet, ledit message étant généré à partir de la télécommande et étant constitué d'un code de fin d'opération d'association résultant d'au moins une manipulation d'au moins un bouton de ladite télécommande.

4. Procédé d'association d'un protocole de communication à un volet motorisé d'un bâtiment selon l'une des revendications précédentes, **caractérisé en ce qu'**une requête de suppression d'association dudit second protocole est envoyée à l'unité de pilotage du moteur du volet, ladite requête étant générée à partir de la télécommande et étant constituée d'un code de suppression d'association résultant d'au moins une manipulation d'au moins un bouton de ladite télécommande.

5. Volet motorisé d'un bâtiment, ledit volet étant entraîné par un moteur commandable au moyen d'une télécommande individuelle, ladite télécommande étant reliée à une unité de pilotage des déplacements du volet via un premier protocole de communication propriétaire sécurisé, ledit moteur étant apte à être commandé au moyen d'un second protocole de communication ouvert de type zigbee selon le procédé des revendications précédentes, **caractérisé en ce que** l'organe de commande d'appairage du volet à un module de commande domotique fonctionnant selon un second protocole de communication ouvert de type zigbee est la télécommande.
